# FASCICULE DE BREVET EUROPEEN

(11) **EP 1 344 401 B1**
(45) Date de publication et mention de la délivrance du brevet: **24.01.2007**
(21) Numéro de dépôt: 01272197.3
(22) Date de dépôt: 19.12.2001
(51) Int. Cl.: H04N 7/173, H04N 7/167, G07F 17/16

(54) **SYSTEME DE DISTRIBUTION D'INFORMATIONS**
DATENVERTEILUNGSSYSTEM
DATA DISTRIBUTION SYSTEM

(30) Priorité: 22.12.2000 CH 251800
(43) Date de publication de la demande: 17.09.2003
(73) Titulaire: Nagracard S.A., 1033 Cheseaux-sur-Lausanne (CH)
(72) Inventeur: HILL, Michael, John, CH-1296 Coppet (CH)
(74) Mandataire: Wenger, Joel-Théophile
(86) Numéro de dépôt international: PCT/IB2001/002591
(87) Numéro de publication internationale: WO 2002/052854

(56) Documents cités:
- EP-A- 0 672 991
- EP-A- 0 843 449
- EP-A- 0 884 669
- EP-A- 0 996 074
- WO-A-00/11871
- US-A- 5 341 425
- US-A- 5 898 456
- CHANG Y -H: "AN OPEN-SYSTEMS APPROACH TO VIDEO ON DEMAND" IEEE COMMUNICATIONS MAGAZINE,US,IEEE SERVICE CENTER. PISCATAWAY, N.J, vol. 32, no. 5, 1 mai 1994 (1994-05-01), pages 68-80, XP000451097 ISSN: 0163-6804

## Description

La présente invention concerne un système et une méthode de gestion de données réparties, en particulier dans un système impliquant un centre de gestion et une pluralité d'unités d'utilisateurs.

Dans un système de distribution de données depuis un site central à l'intention d'un grand nombre d'utilisateurs, deux thèmes viennent régulièrement occuper les organisateurs d'un tel réseau. Le premier concerne la sécurité des données c'est-à-dire de s'assurer que l'utilisateur visé est le seul à recevoir les données demandées, et pour son usage uniquement.

Le deuxième concerne les capacités des moyens de distribution à savoir les lignes galvaniques ou optiques, les câbles ou les faisceaux hertziens.

Le centre de gestion dispose d'une importante base de données contenant tous les produits proposés aux utilisateurs, que ce soit sous forme payante ou gratuite. Selon les structures récentes de ce type de centre, seul une partie de ces produits sont stockés localement, les autres produits étant stockés chez le producteur de ces données et reliés avec le centre de gestion par des voies de communication très rapide.

L'utilisateur envoie une requête en direction du centre de gestion, comprenant son identité, son adresse, et le produit souhaité.

Le centre de gestion détermine le bien fondé de cette requête, en particulier selon les modes de payement propre à cet utilisateur. Ces modes peuvent être par abonnement, avec accès illimité aux produits, sur facture, sur paiement par carte de crédit ou par pré-paiement.

Le produit est envoyé sous forme encryptée avec une clé propre à l'utilisateur c'est-à-dire selon une clé contenue dans un module de sécurité situé chez l'utilisateur.

Ce type de service est utilisé pour la télévision à péage dans le cadre de la vidéo à la demande. Dans cette application, l'abonné dispose d'un module de sécurité connecté à son décodeur qui traite des données encryptées et fourni au décodeur les clés de décryptage.

Ce module de sécurité gère les informations de crédit également.

Ce système fonctionne actuellement sous la forme NVOD et VOD. Dans le premier cas ("Near Vidéo On Demand"), le produit proposé à l'achat est envoyé en boucle à tous les utilisateurs, parfois sur plusieurs canaux simultanément avec un décalage en temps. L'acheteur ne peut donc acheter que ce produit et attendra le prochain départ pour commencer la visualisation. Une variante de ce mode consiste à envoyer plusieurs produits pendant les temps d'inactivité du système (généralement le matin), produits qui sont stockés dans la mémoire de masse du décodeur. Les produits ainsi mémorisés sont ensuite proposés à l'achat à l'utilisateur et peuvent être visualisé à n'importe quel moment.

Dans une variante comme dans l'autre, le nombre de produits proposés est inférieur à dix compte tenu du fait des possibilités de transmission et de stockage d'un produit.

Le deuxième cas, celui qui nous intéresse plus particulièrement, propose de vous fournir le produit de votre choix parmi une bibliothèque de produits très importante. Chaque utilisateur peut donc faire son choix parmi cette bibliothèque et le centre de gestion lui envoie le produit désiré. Ceci n'est possible que dans un environnement restreint avec des capacités de transmissions très importantes.

La mise en oeuvre à large échelle d'un tel système a très vite buté sur les limites de bande passante des moyens de transmissions. Pour mémoire, il est ici rappelé que la transmission d'un film de 2 heures représente 1 Giga Octets de données hautement compressé.

Pour tenter de diminuer la charge d'un serveur principal, une première solution est décrite dans le document WO 00/11871 dans lequel l'on a disséminé dans des sous-réseaux, des serveurs locaux qui contiennent une unité de stockage de grande capacité pour décharger le serveur principal. Cette méthode implique l'installation de serveurs locaux en grand nombre et d'assurer leur approvisionnement par le serveur central. Elle n'est donc pas adaptée à une structure souple et rapide car l'installation d'un serveur local pose de gros problème quant au lieu de son installation et doit répondre à un besoin d'un grand nombre d'utilisateurs.

Le but de la présente invention est de proposer un système et une méthode permettant de réduire les besoins en bande passante tout en assurant une meilleure disponibilité pour l'utilisateur final, d'un produit parmi un vaste choix et pouvant être reçu par ledit utilisateur dans un temps court, sans compromis sur la qualité ni le temps pour obtenir le produit.

Ce but est atteint par un système selon la revendication 1.

Ainsi, grâce à ce système, le centre de gestion utilise les moyens de stockage des unités d'utilisateur comme mémoire relais. II suffit que le produit soit envoyé une seule fois à destination d'un utilisateur parmi un groupe d'utilisateurs, pour que chaque requête du même produit émanant du groupe d'utilisateurs considéré, ne provoque plus la transmission depuis le centre de gestion mais l'unité contenant le produit souhaité prendra le relais localement pour le transmettre à l'utilisateur final.

Cette invention recouvre également une méthode selon le revendication 5.

Cette méthode comprend également une phase de détection c'est-à-dire de test afin de connaître l'unité ou les unités d'utilisateur disposant d'un tel produit. Ceci peut se faire d'une manière centralisée parce que pilotée par le centre de gestion mais également peut être établie grâce à une requête aux unités d'utilisateur.

En effet, il se peut qu'une unité soit déconnectée ou ne soit plus en mesure de faire ce transfert. Dans ce cas, la méthode selon l'invention consiste à déterminer quelles sont les unités qui disposent du produit recherché et d'ordonner le transfert d'une unité sur une autre.

Un aspect important de l'invention est la prise en compte de la sécurité dans ces opérations.

Chaque produit est envoyé sous forme encryptée vers son destinataire. L'opération d'encryptage est assurée par une clé de transport CA habituellement générée aléatoirement. Selon une forme de réalisation de l'invention, c'est sous cette forme que le centre de gestion stocke les produits.

Lorsque l'utilisateur A demande un produit X, la clé CA, ayant servi à encrypter le produit X, est encryptée par une clé Ka propre à l'utilisateur A et jointe aux données encryptées du produit X.

Lorsque l'unité de l'utilisateur A est sollicitée pour transmettre le produit X vers l'unité B, seul le produit encrypté X est transmis par le réseau bidirectionnel. Le centre de gestion, connaissant la clé CA, va l'encrypter selon une clé Kb propre à l'utilisateur B et la lui transmettre. Une fois que le produit X venant de l'unité A et que la clé Kb arrive à l'unité B, il est possible alors pour l'unité B de bénéficier du produit X.

La quantité d'information transmise depuis le centre de gestion est négligeable en regard des données transmises entre l'unité A vers l'unité B.

Il est précisé que la liaison entre un groupe d'utilisateurs est de type bidirectionnel à haut débit. Par contre, il n'est pas nécessaire que la liaison avec le centre soit du même type. Il est ainsi possible que seule la liaison vers les utilisateurs soit de type à haut débit (par liaison satellite par exemple), le retour s'effectuant par un classique modem.

Les unités d'utilisateur selon une variante d'implémentation de l'invention, sont reliés à plusieurs réseaux. Ces réseaux sont gérés par des opérateurs différents et la méthode selon l'invention permet d'utiliser les capacités de connexion via un autre opérateur pour effectuer le transfert.

Un exemple d'une telle configuration met en oeuvre une unité qui comprend un récepteur hertzien (ou satellite) et une interface avec un réseau câblé. Selon cet exemple, le centre de gestion dispose d'une voie à sens unique vers son abonné par la voie hertzienne. Néanmoins, le centre de gestion dispose des informations nécessaires pour localiser l'abonné sur le réseau câble d'un autre opérateur. Il sera alors possible de faire transiter les requêtes de produits à destination du centre de gestion et inversement, le centre peut requérir le transfert d'un produit depuis un abonné du réseau câblé vers un autre abonné.

L'invention sera mieux comprise grâce à la description détaillée qui va suivre en se référant aux dessins annexés dans lesquels :
- La figure 1 représente la configuration du système de l'invention,
- Les figures 2 à 5 représentent les paquets de données échangés entre le centre de gestion et les unités d'utilisateur,
- La figure 6 décrit un environnement type d'implémentation de l'invention.

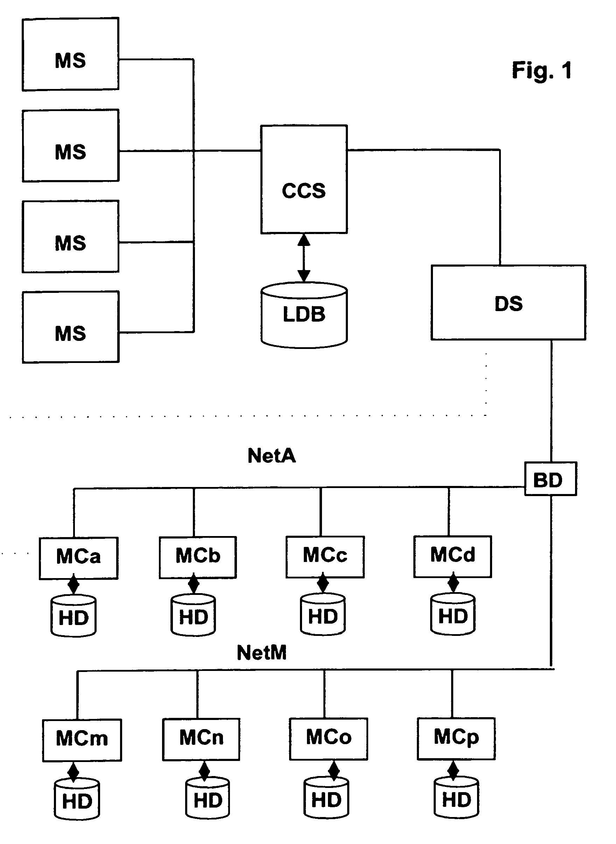

Sur la figure 1, le centre de gestion DS est relié en amont au centre de traitement CCS en charge de gérer les demandes de produits à diffuser émanant des utilisateurs. Pour cela il dispose d'une mémoire de stockage locale LBD contenant les produits les plus souvent demandés. Ce centre de traitement CCS est également en liaison avec des serveurs de données MS qu'il peut solliciter à tout moment. Ces serveurs MS sont reliés avec le centre de traitement CCS par une liaison à haute vitesse.

Le centre de gestion DS est relié par des moyens connus aux unités d'utilisateurs MC (câble, fibre optique, hertzien, ADSL, T1 ...). Ces unités comportent des moyens de stockage HD de capacité suffisante pour stocker au moins un produit, par exemple de plusieurs Giga Octets.

La liaison entre chaque unité MC et le centre de gestion peut être soit par le même canal que l'envoi des données aux unités, soit un canal alternatif tel que par modem, liaison ADSL, ou GSM représenté par la ligne pointillée.

Une requête est envoyée par l'unité MCa vers le centre de gestion DS, pour un produit X. Le centre examine si ce produit est déjà présent dans l'une des unités connectées au même réseau local rapide NetA, soit dans les unités MCb, MCc et MCd dans notre exemple. Le concentrateur BD dans notre exemple ne permet pas la liaison entre le réseau NetA et NetM. Dans l'hypothèse inverse, les unités MCm à MCp seraient également prise en compte pour la détermination de la présence du produit X.

Si le produit X n'est trouvé dans aucune unité, il est envoyé à l'unité MCa, encrypté par une clé de transport CA, cette clé étant elle-même encryptée par une clé spécifique à l'unité MCa.

Lorsque l'unité MCb requiert le même produit X au centre de gestion, le centre transmet à l'unité MCa l'instruction de transférer le produit X encrypté avec la clé CA. En parallèle, le centre de gestion envoie à l'unité MCb, la clé de transport CA encryptée par une clé propre à l'unité MCb. Cette dernière est dès lors en mesure de profiter du produit X.

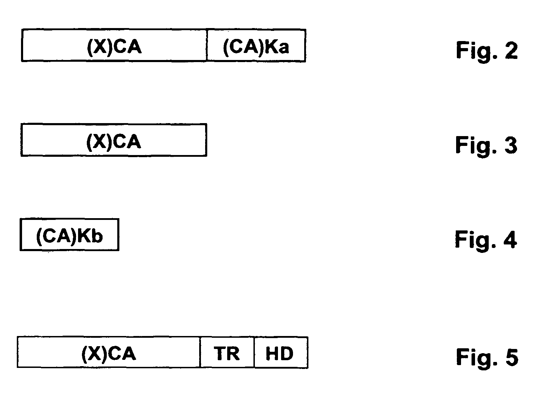

La figure 2 représente un paquet envoyé par le centre de gestion à l'unité d'utilisateur MCa. Le produit X est encrypté par la clé CA, elle-même encryptée par la clé spécifique à l'unité MCa, la clé Ka.

Le centre demande à l'unité MCa de transférer le produit X à l'unité MCb et c'est le paquet représenté à la figure 3 qui est envoyé sur le réseau local.

Le centre de gestion envoie la clé CA, encrypté par la clé spécifique à l'unité MCb, à cette dernière.

Il est ainsi possible qu'une unité d'utilisateur contienne plusieurs produits dans son unité de stockage. Pour gérer cette mémoire, il est prévu selon l'invention, d'ajouter à chaque produit un indicateur de persistance. En effet, si ce produit est hautement spécialisé, il y aura peu de chances pour qu'il soit demandé par un autre utilisateur. Dans ce cas, le produit sera effacé de l'unité de stockage après un laps de temps court.

Inversement, si ce produit est une nouveauté très connue, la durée de stockage sera longue afin de satisfaire un maximum d'utilisateur. Cet indicateur de persistance peut être remis à zéro à chaque demande de transfert ou sur une commande du centre de gestion.

Cette structure permet de gérer d'une manière optimale les capacités de stockage des unités d'utilisateur. En effet, lorsque le produit X est envoyé à l'unité MCa, il est disponible sur le réseau à cet instant. Pour anticiper une autre demande émanant d'un autre groupe, il est demandé à l'unité MCm de stocker également le produit X. Le paquet propre à l'unité MCa, contenant la clé CA encryptée avec la clé Ka, n'est pas stocké dans l'unité MCm.

Le centre de gestion est alors prêt à faire face à une requête émanant d'un membre du groupe A (NetA) et du groupe M (NetM). Cette pratique peut être généralisée pour stocker chaque produit envoyé par au moins une unité de chaque groupe.

Pour déterminer quelle unité sera choisie, il peut être fait référence à la place disponible dans ladite unité, des préférences de l'utilisateur ou d'un groupe d'utilisateur.

En connaissant le profil de l'utilisateur, il est possible d'anticiper sa demande si le produit correspond à une catégorie régulièrement achetée par cet utilisateur. II est également possible d'utiliser une unité ayant une très faible utilisation par son utilisateur.

Par la gestion d'un profil de groupe d'utilisateurs, il est possible d'établir les préférences de ce groupe et anticiper leurs besoins éventuels. Selon la localisation du réseau local considéré, un groupe sera davantage intéressé par le sport et c'est cette catégorie de produit qui sera prioritairement stocké dans les unités de ce groupe.

Un des problèmes que peut rencontrer le centre de gestion dans sa tentative de transfert d'une unité sur l'autre, est lié à l'activité de l'unité contenant le produit.

Selon les exécutions, une unité peut ne pas pouvoir envoyer un produit sur le réseau et en même temps visualiser un autre produit (ou le même) pour son propriétaire.

Le centre peut dans une certaine mesure connaître l'activité supposée de chaque unité mais les procédures d'achats impulsifs peuvent fonctionner sans connexion synchrone avec le centre de gestion. L'autorisation et le crédit étant gérés dans le module de sécurité de l'utilisateur.

Cet aspect est particulièrement important lorsque les unités n'ont pas de voie de retour à haut débit avec le centre de gestion. Dans ce cas, il n'est pas souhaitable de demander à chaque unité son statut pour connaître l'activité sur l'unité disposant du produit dans son moyen de stockage.

C'est pourquoi, lorsqu'une unité A requiert un produit donné, elle collecte au préalable la liste des produits stockés dans les unités appartenant au même réseau. Cette opération est très rapide et ne pénalise pas les performances du réseau car la quantité de données échangées est faible.

Dans les données envoyées par les autres unités à l'unité A, l'état de chaque unité est également inclus. Une unité peut alors signaler qu'elle est indisponible pour une opération de téléchargement.

Ces données une fois collectées, l'unité A les envoie au centre de gestion avec la requête pour le produit souhaité. Le centre peut vérifier l'état de chaque unité en fonction de l'image dont il dispose dans sa base de données et transmettre l'instruction de transfert à l'unité la plus capable d'effectuer ce transfert sans perturbation pour son utilisateur.

Cette manière de procéder permet au centre de gestion de disposer régulièrement d'informations fiables sur l'ensemble des unités d'utilisateur. Il serait même possible de supprimer l'image pour chaque unité des produits envoyés pour n'utiliser que la liste reçue avec chaque requête.

Dans une variante de l'invention, l'unité A envoie sur le réseau local une requête spécifiant le produit recherché. Les autres unités disposant de ce produit se font alors connaître et signalent également leurs disponibilités. Selon le protocole choisi, l'unité A demande immédiatement le transfert du produit X de la part de l'unité capable de le lui fournir. L'unité A contacte le centre de gestion pour l'informer de son désir d'utiliser le produit X et l'informe que ce produit se trouve déjà dans son unité de stockage. Il ne reste plus au centre la fonction de transmettre la clé spécifique à l'unité A, Cela peut se faire par le même canal que celui utilisé par l'unité A (par modem par exemple) ou par la voie de transmission standard (câble, satellite, fibre optique...).

Pour des raisons opérationnelles, les unités d'utilisateur, une fois transmis la liste des produits stockés dans leur unité de stockage, bloque le compteur de persistance durant un temps présélectionné afin d'éviter qu'un produit soit effacé dans l'intervalle séparant cette interrogation et un possible ordre de transfert.

Lorsque le transfert est effectué, l'unité A confirme que ce transfert a été terminé avec succès accompagné de sa signature. Cette dernière permettra de retracer l'utilisation de tous les produits envoyés, ceci par exemple dans le but d'en faire un rapport au serveur de données.

Lors de la sortie d'un nouveau film, une transmission préalable est effectuée afin de stocker ce film dans au moins une unité par groupe. Lors du lancement promotionnel, la demande des utilisateurs peut être immédiatement satisfaite selon le mode de l'invention.

Cette méthode peut être généralisée afin d'utiliser les capacités de stockage des unités d'utilisateur. Il est courant de connecter un grand nombre d'unités sur un réseau local. L'utilisation d'une partie seulement des capacités de stockage (50% par exemple) de chaque unité représente la possibilité de stocker un grand nombre de produits répartis dans toutes ces unités. Pour une centaine d'unités connectées sur un réseau, cela signifie environ 500 produits immédiatement disponible.

L'on sélectionnera de préférences des unités ayant une très faible activité pour ne pas pénaliser l'utilisation normale de l'unité. Il est aussi possible de stocker ce film dans plusieurs unités par groupe afin de s'assurer qu'une distribution peut se faire à tout moment.

Selon une variante de l'invention, différentes copies du même produit sont encryptées par une clé CA différente. Lorsque le produit X est envoyé à destination d'un membre du groupe NetA, la clé CA1 est utilisée. C'est avec une clé CA2 que le même produit X est encrypté et envoyé à destination d'un membre du groupe NetM. Ceci permet de diminuer les conséquences d'un décryptage malveillant du produit X. Dans ce cas, seul les membres d'un même groupe pourraient obtenir la clé CA1 et bénéficier du produit X sans contrepartie.

Le produit encrypté est accompagné d'un en-tête HD tel qu'illustré à la figure 5. Cet en-tête est en clair afin que l'on puisse reconnaître le type de produit qui est stocké dans l'unité. Il contient le titre, la source du produit, la date de création, la durée de validité (ou indice de persistance), une signature du centre de gestion et du serveur de données avec leurs certificats, le nombre de transfert possible. Cette liste n'est pas exhaustive et peut comprendre d'autres informations.

Ce bloc de données est accompagné d'une signature afin de garantir des ces données ne sont pas modifiées.

Pour suivre et retracer les différents transferts d'une unité vers l'autre d'un produit, il est ajouté audit produit une section d'enregistrement des transactions TR. Cette section est divisée en modules, chaque module permettant de retracer un transfert.

L'unité A contient le produit X dans son unité de stockage. Lors d'un transfert vers l'unité B, l'unité A inscrit sa signature dans le module disponible avec comme statut "transmis". Lorsque la transmission est terminée, l'unité B inscrit sa signature dans le même module avec la mention "reçu".

Ainsi, à chaque transfert, la section d'enregistrement des transactions se complète avec la signature des unités par lesquelles le fichier aura transité. Une fois que le nombre maximum de transfert autorisé est atteint, la section d'enregistrement des transactions ainsi que l'en-tête du produit sont envoyés au centre de traitement pour vérification. Ces vérifications arrivant des unités d'utilisateur, peuvent être signées par le centre de gestion et envoyées au serveur de données MS.

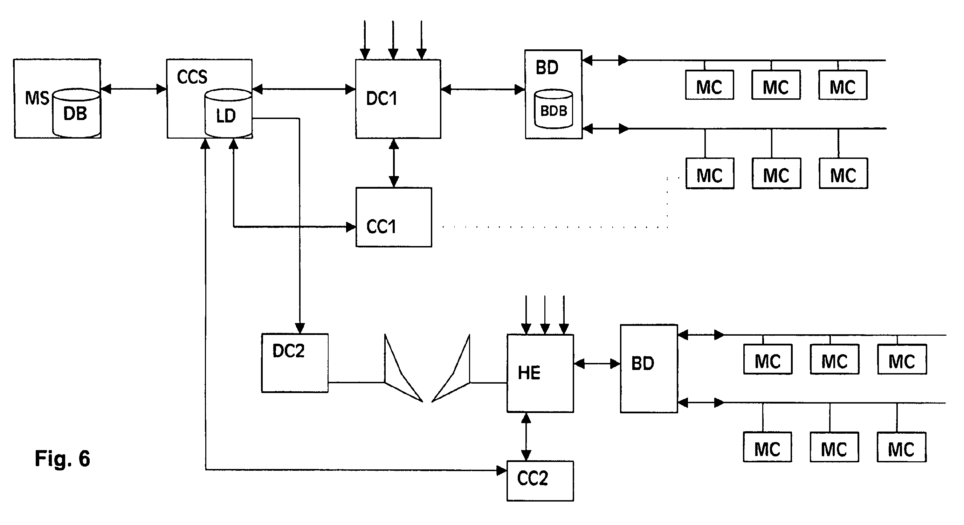

Selon une architecture mettant en oeuvre différents opérateurs tel qu'illustré à la figure 6, le serveur de données MS, avec sa base de données DB est relié à un centre de traitement CCS. Dans notre exemple, ce centre est relié à deux centres de distribution DC1 et DC2. Le premier est relié à des groupes d'utilisateur MC par une liaison à haute vitesse bidirectionnelle. Généralement, un groupe d'utilisateur est relié à une tête de réseau BD dont les fonctionnalités peuvent être plus ou moins évoluées. La version la plus simple ne fonctionne que comme relais entre le centre de distribution et le groupe d'utilisateur en aval, les variantes les plus sophistiquées elles, permettent d'effectuer des transferts entre deux groupes d'utilisateur et disposent de leur propre moyens de stockage BDB.

Les unités d'utilisateur MC peuvent appeler un centre de collecte d'appel CC1 pour les opérations de commande de produits. Selon les modes d'autorisation choisis, le centre de distribution DC1 ne dispose pas des moyens pour autoriser le décryptage d'un produit mais fait appel pour cela au centre de traitement CCS. Il est à noter que le centre de distribution DC1 peut proposer une palette de services provenant de plusieurs sources et est géré par une entité distincte de celle gérant le centre de traitement. C'est pourquoi ce dernier peut ne pas déléguer l'autorisation et exiger de recevoir les requêtes de produits. Cette exigence peut être appliquée également jusqu'au serveur de données MS. Selon une forme d'exécution de l'invention, le produit X est encrypté par une première clé générée par le serveur de données MS et une deuxième clé provenant du centre de traitement CCS.

Selon une variante de cette configuration, plusieurs centres de traitement CCS et serveurs de données MS, se partagent la fourniture des produits. Le centre de distribution DC reçoit les requêtes des utilisateurs et relaient cette demande en fonction de l'endroit où se trouvent ces produits. L'en-tête du produit HD inclus une indication de la source de ce produit (le serveur de données) ainsi que le centre de traitement en charge de ce dernier.

Le centre de distribution DC2 est connecté grâce à une liaison satellite vers ses utilisateurs. Cette liaison arrive à un serveur local HE qui regroupe plusieurs services. Ce serveur distribue ensuite ces services par un réseau câblé par exemple.

Pour la voie de retour vers le centre de traitement, ce serveur est connecté à un concentrateur d'appel CC2.

Dans le cas où une partie des unités d'utilisateur MCa ne comprendraient pas d'unité de stockage, par exemple d'une génération précédente, la solution selon l'invention consiste à utiliser une unité voisine MCb qui contient une telle unité de stockage et de faire diffuser cette unité MCb vers l'unité cible MCa. L'étape de décrypter les données se fait en continu grâce au droit obtenu préalablement auprès du centre de gestion. La technologie actuelle autorise la lecture d'un fichier MPEG et son envoi vers l'unité cible tout en visualisant un autre fichier MPEG sur la même unité par l'utilisateur par exemple.

Du fait que la vitesse de transfert est notoirement plus élevée que le temps réel de déroulement d'un film par exemple, l'unité cible va piloter l'unité émettrice compte tenu de l'avancement de la consommation du fichier.

On peut imaginer que des fonctions évoluées telles que "pause", retour" ou "boucle" sont ordonnées par l'unité cible et exécutées par l'unité émettrice. Pour fonctionner correctement, l'unité cible disposera d'une mémoire tampon qui autorise une transmission par blocs.

## Revendications

1. Système comprenant au moins un centre de gestion disposant d'un grand nombre de produits et une pluralité d'unités d'utilisateur comprenant chacune des moyens de visualisation de produits, des moyens de sécurité, système dans lequel: tout ou partie des unités d'utilisateur sont connectées à au moins un réseau local, la liaison entre une première unité comprenant des moyens de stockage (HD) et une seconde unité d'utilisateur est de type bidirectionnel, cette première unité d'utilisateur et cette seconde unité d'utilisateur appartenant audit réseau local, ces unités d'utilisateur comprennent des moyens pour effectuer le transfert d'un produit (X) encrypté par une clé de transport (CA) et stocké dans les moyens de stockage de la première unité d'utilisateur à destination de la seconde unité d'utilisateur, le centre de gestion comprend des moyens pour transmettre une l'autorisation à la seconde unité pour décrypter le produit (X).

2. Système selon la revendication 1, **caractérisé en ce que** la première unité d'utilisateur comprend des moyens pour transmettre le produit encrypté à la deuxième unité d'utilisateur, cette dernière comprenant des moyens pour décrypter, dans ses moyens de sécurité, la clé de transport (CA) envoyée par le centre de gestion et encryptée par une clé spécifique à la deuxième unité d'utilisateur.

3. Système selon les revendications 1 et 2, **caractérisé en ce qu'**au moins ladite seconde unité d'utilisateur comprend des moyens pour requérir et lire la liste des produits stockés dans les unités de stockage des autres unités d'utilisateur connectées au même réseau local et pour envoyer cette liste à destination du centre de gestion.

4. Système selon les revendications 1 et 2, **caractérisé en ce que** la seconde unité d'utilisateur est de type sans moyen de stockage et que le produit (X) est décrypté et transmis à des moyens de visualisation selon un débit commandé par la seconde unité.

5. Méthode pour l'optimisation de la transmission à la demande de produits entre un centre de gestion et de distribution (DS, DC) et une pluralité d'unités d'utilisateur (MCa, MCb ... MCz) comprenant chacune des moyens de visualisation de produits, méthode consistant à:
- envoyer au centre de gestion (CCS, DS), une requête de transmission d'un produit (X) de la part d'une seconde unité d'utilisateur (MCb) connectée à un réseau local bidirectionnel (NetA),
- déterminer si le produit demandé est déjà dans une quelconque première unité d'utilisateur (MCa) connectée sur le même réseau local (NetA),
- dans la négative, le transmettre depuis le centre de gestion (DS) à destination de la seconde unité d'utilisateur (MCb) et stocker le produit sous forme encryptée par une clé de transport (CA), dans ladite première unité d'utilisateur (MCb),
- dans le cas positif, ordonner le transfert du produit encrypté par la clé de transport (CA), depuis la première unité (MCa) à destination de la seconde unité d'utilisateur (MCb),
- transmettre par le centre de gestion les informations nécessaires ((CA)Ka) au décryptage du produit, ces informations comprenant ladite clé de transport (CA) encryptée par une clé de ladite seconde unité d'utilisateur (MCb).

6. Méthode selon la revendication 5, **caractérisée en ce que** le produit est encrypté par une clé de transport (CA) et que cette clé est encryptée par une clé (Kb) spécifique à la seconde unité d'utilisateur (MCb) et envoyée à cette dernière par le centre de gestion.

7. Méthode selon la revendication 5, **caractérisée en ce qu'**elle consiste à ordonner le stockage préalable du produit à au moins une unité d'utilisateur parmi les unités d'utilisateur connectées au même réseau local.

8. Méthode selon la revendication 7, **caractérisée en ce que** la sélection de l'unité d'utilisateur choisie parmi les unités d'utilisateur connectées au même réseau local pour recevoir le produit et n'ayant pas sollicité le produit est effectuée selon un profil de consommation de ladite unité.

9. Méthode selon la revendication 8, **caractérisée en ce que** le profil de consommation est établi selon le type de produit habituellement consommé.

10. Méthode selon la revendication 8, **caractérisée en ce que** le profil de consommation est établi selon le taux d'utilisation de ladite unité d'utilisateur.

11. Méthode selon l'une des revendications 5 à 10, **caractérisée en ce qu'**elle consiste, préalablement à l'envoi d'une requête au centre de gestion, à déterminer les produits stockés dans les unités connectées au même réseau, et à transmettre ces informations au centre de gestion.

12. Méthode selon l'une des revendications 5 à 11, **caractérisée en ce qu'**elle consiste à envoyer un produit préalablement à une requête d'utilisateur, dans au moins une unité parmi les unités d'utilisateur connectées au même réseau local.

13. Méthode selon l'une des revendications 5 à 12, **caractérisée en ce qu'**elle consiste à:
- encrypter le produit (X) par une seconde clé (k2) par un serveur de données (MS) connecté au centre de gestion (DS), ou centre de traitement (CCS)
- transmettre le requête du produit (X) au serveur de données (MS), qui après vérification, retourne la seconde clé (k2) encryptée par une clé de transport définie par le centre de gestion.

14. Méthode selon la revendication 13, **caractérisée en ce que** le produit comprend un en-tête (HD) et une zone d'enregistrement de transactions (TR), et **en ce qu'**elle consiste à marquer cette zone par la signature de l'unité émettrice et par la signature de l'unité réceptrice.

15. Méthode selon la revendication 14, **caractérisée en ce que** le centre de gestion peut à tout moment demander le renvoi de la zone de transactions (TR) accompagné de l'en-tête du produit (HD) à une unité d'utilisateur pour vérification.

## Claims

1. A system comprising at least one operating centre that has a great number of products and a plurality of user units comprising each product visualisation means, security means, a system in which : all or a part of the user units are connected to at least one local network, the link between a first user unit comprising storage means (HD) and a second user unit is of the bi-directional type, this first user unit and this second user unit belonging to said local network, these user units comprise means for transferring a product (X) encrypted by a transport key (CA) and stored in the storage means of the first user unit to the second user unit, the operating centre comprises means for transmitting an authorisation to the second unit for decrypting the product (X).

2. A system according to Claim 1, **characterised in that** the first user unit comprises means for transmitting the encrypted product to the second user unit, said unit comprising decryption means in its security means, of the transport key (CA) sent by the operating centre and encrypted by a key specific to the second user unit.

3. A system according to Claims 1 and 2, **characterised in that** at least said second user unit comprises means for requiring and reading the list of products that are stored in the storage units of the other user units connected to the same local network and for sending this list to the operating centre.

4. A system according to claims 1 to 2, **characterised in that** the second user unit is of the type without storage means and **in that** the product (X) is decrypted and transmitted to visualisation means according to a flow rate driven by the second unit.

5. A method for the optimisation of the transmission upon request of products between an operating and distribution centre (DS, DC) and a plurality of user units (MCa, MCb... MCz), comprising each product visualisation means, method consisting in:
- sending a request for transmission of a product (X) to the operating centre (CCS, DS) from a second user unit (MCb) connected to a local bi-directional network (NetA),
- determining if the requested product is already in any first user unit (MCa) connected to the same local network (NetA),
- in the negative event, transmitting it from the operating centre (DS) to the second user unit (MCb) and storing the product in encrypted form by a transport key (CA), in said first user unit (MCb),
- in the positive event, ordering the transfer of the product encrypted by the transport key (CA), from the first unit (MCa) to the second user unit (MCb),
- transmitting by the operating centre the necessary data ((CA)Ka) for the decryption of the product, these data comprising said transport key (CA) encrypted by a key of said second user unit (MCb).

6. A method according to Claim 5, **characterised in that** the product is encrypted by a transport key (CA) and that this key is encrypted by a key specific (Kb) to the second user unit (MCb) and sent to the latter by the operating centre.

7. A method according to Claim 5, **characterised in that** it consists in ordering the previous storage of the product at least to one user unit among the user units connected to the same local network.

8. A method according to Claim 7, **characterised in that** the selection of the user unit chosen among the user units connected to the same local network, for receiving the product and that have not requested the product is carried out according to the consumption profile of said unit.

9. A method according to Claim 8, **characterised in that** the consumption profile is established according to the type of product normally consumed.

10. A method according to Claim 8, **characterised in that** the consumption profile is established according to the activity ratio of said user unit.

11. A method according to one of Claims 5 to 10, **characterised in that** it consists in, previous to the sending of a request to the operating centre, determining the products that are stored in the units connected to the same network and to transmitting these data to the operating centre.

12. A method according to one of Claims 5 to 11, **characterised in that** it consists in sending a product in advance without specific request from a user, in at least one unit among the user units connected to the same local network.

13. A method according to one of Claims 5 to 12, **characterised in that** it consists in:
- encrypting the product (X) with a second key (k2) by an on-line data base server (MS) connected to the operating centre (DS) or processing center (CCS),
- transmitting the request for the product (X) to the on-line data base server (MS), who after verification, returns the second key (k2) encrypted by a transport key defined by the operating centre.

14. A method according to Claim 13, **characterised in that** the product comprises a header (HD) and a transaction registration zone (TR), and **in that** it consists in marking this zone with the signature of the emitting unit and of the receiving unit.

15. A method according to Claim 14, **characterised in that** the operating centre can at any time request the re-emission of the transaction zone (TR) accompanied by the product header (HD) to a user unit for verification.

## Patentansprüche

1. System, zumindest ein Verwaltungszentrum, das über eine grosse Anzahl von Produkten verfügt, sowie eine Mehrzahl von Benutzereinheiten umfassend, deren jede Mittel zur Visualisierung der Produkte und Sicherheitsmittel umfasst, wobei in dem System: alle oder ein Teil der Benutzereinheiten an zumindest ein lokales Netz angeschlossen sind, wobei die Verbindung zwischen einer ersten Benutzereinheit, die Speichermittel (HD) umfasst, und einer zweiten Benutzereinheit vom zweiseitig gerichteten Typ ist, und wobei diese erste Benutzereinheit und diese zweite Benutzereinheit zu dem lokalen Netz gehören, diese Benutzereinheiten Mittel umfassen, um zu bewirken, dass ein Produkt (X), das mit einem Transportschlüssel (CA) verschlüsselt und in den Speichermitteln der ersten Benutzereinheit gespeichert ist, zur zweiten Benutzereinheit übertragen wird, und das Verwaltungszentrum Mittel umfasst, um eine Autorisierung für die Entschlüsselung des Produkts (X) an die zweite Einheit zu übermitteln.

2. System nach Anspruch 1, **dadurch gekennzeichnet, dass** die erste Benutzereinheit Mittel umfasst, um das verschlüsselte Produkt an die zweite Benutzereinheit zu übermitteln, wobei letztere Mittel umfasst, um in ihren Sicherheitsmitteln den Transportschlüssel (CA) zu entschlüsseln, der vom Verwaltungszentrum zugeschickt und mit einem für die zweite Benutzereinheit spezifischen Schlüssel verschlüsselt wurde.

3. System nach Ansprüchen 1 und 2, **dadurch gekennzeichnet, dass** zumindest die zweite Benutzereinheit Mittel umfasst, um die Liste der Produkte anzufordern und zu lesen, die in den Speichereinheiten der anderen Benutzereinheiten gespeichert sind, die an das gleiche lokale Netz angeschlossen sind, und um diese Liste zum Verwaltungszentrum zu schicken.

4. System nach Ansprüchen 1 und 2, **dadurch gekennzeichnet, dass** die zweite Benutzereinheit vom Typ ohne Speichermittel ist und dass das Produkt (X) mit einer durch die zweite Einheit gesteuerten Geschwindigkeit entschlüsselt und an Mittel zur Visualisierung übermittelt wird.

5. Verfahren zur Optimierung der auf Nachfrage erfolgenden Übermittlung von Produkten zwischen einem Verwaltungs- und Verteilzentrum (DS, DC) und einer Mehrheit von Benutzereinheiten (MCa, MCb, ..., MCz), deren jede Mittel zur Visualisierung von Produkten umfasst, wobei das Verfahren darin besteht:
- zum Verwaltungszentrum (CCS, DS) seitens einer zweiten Benutzereinheit (MCb), die an ein zweiseitig gerichtetes lokales Netz (NetA) angeschlossen ist, eine Anforderung für die Übermittlung eines Produkts (X) zu schicken,
- festzustellen, ob das verlangte Produkt bereits in einer beliebigen ersten Benutzereinheit (MCa) vorhanden ist, die an das gleiche lokale Netz (NetA) angeschlossen ist,
- wenn nicht, es vom Verwaltungszentrum (DS) an die zweite Benutzereinheit (MCb) zu schicken und das Produkt in mit einem Transportschlüssel (CA) verschlüsselter Form in der ersten Benutzereinheit (MCb) zu speichern,
- wenn ja, die Übertragung des mit dem Transportschlüssel (CA) verschlüsselten Produkts von der ersten Benutzereinheit (MCa) zur zweiten Benutzereineit (MCb) zu verfügen,
- durch das Verwaltungszentrum die für die Entschlüsselung des Produkts erforderlichen Daten ((CA)Ka) zu übermitteln, wobei diese Daten den Transportschlüssel (CA) umfassen, der mit einem Schlüssel der zweiten Benutzereinheit (MCb) verschlüsselt ist.

6. Verfahren nach Anspruch 5, **dadurch gekennzeichnet, dass** das Produkt mit einem Transportschlüssel (CA) verschlüsselt wird und dass dieser Schlüssel mit einem Schlüssel (Kb) verschlüsselt wird, der für die zweite Benutzereinheit (MCb) spezifisch ist und durch das Verwaltungszentrum an letztere geschickt wird.

7. Verfahren nach Anspruch 5, **dadurch gekennzeichnet, dass** es darin besteht, die Speicherung des Produkts in zumindest einer Benutzereinheit unter den an das gleiche lokale Netz angeschlossenen Benutzereinheiten im Voraus zu veranlassen.

8. Verfahren nach Anspruch 7, **dadurch gekennzeichnet, dass** die Auswahl der Benutzereinheit, die unter den an das gleiche lokale Netz angeschlossenen Benutzereinheiten ausgewählt wird, um das Produkt zu empfangen, aber das Produkt nicht verlangt hat, gemäss einem Verbrauchsprofil dieser Einheit erfolgt.

9. Verfahren nach Anspruch 8, **dadurch gekennzeichnet, dass** das Verbrauchsprofil nach dem üblicherweise verbrauchten Produktetyp erstellt wird.

10. Verfahren nach Anspruch 8, **dadurch gekennzeichnet, dass** das Verbrauchsprofil nach der Nutzungsrate der Benutzereinheit erstellt wird.

11. Verfahren nach einem der Ansprüche 5 bis 10, **dadurch gekennzeichnet, dass** es darin besteht, vor dem Versand einer Anforderung an das Verwaltungszentrum die Produkte festzustellen, die in den an das gleiche Netz angeschlossenen Einheiten gespeichert sind, und diese Informationen an das Verwaltungszentrum zu übermitteln.

12. Verfahren nach einem der Ansprüche 5 bis 11, **dadurch gekennzeichnet, dass** es darin besteht, ein Produkt vor einer Benutzeranforderung an zumindest eine Benutzereinheit unter den an das gleiche lokale Netz angeschlossenen Einheiten zu schicken.

13. Verfahren nach einem der Ansprüche 5 bis 12, **dadurch gekennzeichnet, dass** es darin besteht:
- das Produkt (X) durch einen an das Verwaltungszentrum (DS) oder das Verarbeitungszentrum (CCS) angeschlossenen Datenserver (MS) mit einem zweiten Schlüssel (k2) zu verschlüsseln,
- die Anforderung des Produkts (X) an den Datenserver (MS) zu übermitteln, der nach Überprüfung den zweiten Schlüssel (k2) zurückliefert, der mit einem durch das Verwaltungszentrum definierten Transportschlüssel verschlüsselt ist.

14. Verfahren nach Anspruch 13, **dadurch gekennzeichnet, dass** das Produkt einen Header (HD) und einen Bereich für die Aufzeichnung der Transaktionen (TR) umfasst, und **dadurch**, dass es darin besteht, diesen Bereich mit der Signatur der versendenden Einheit und mit der Signatur der empfangenden Einheit zu markieren.

15. Verfahren nach Anspruch 14, **dadurch gekennzeichnet, dass** das Verwaltungszentrum jederzeit zur Überprüfung von einer Benutzereinheit die Rücksendung des Bereichs für die Transaktionen (TR) zusammen mit dem Produktheader (HD) verlangen kann.
